# EUROPEAN PATENT APPLICATION

(11) **EP 1 954 046 A1**
(43) Date of publication of application: **06.08.2008**
(21) Application number: 06729179.9
(22) Date of filing: 15.03.2006
(51) Int. Cl.: H04N 7/173, G06F 3/048, G06F 13/00, G06F 17/30, G06Q 30/00

(54) **ACTIVE BUTTON**

(30) Priority: 10.11.2005 JP 2005326626
(71) Applicant: MATSUSHITA ELECTRIC INDUSTRIAL CO., LTD., Osaka 571-8501 (JP)
(72) Inventor: IDE, Shinichi, Chuo-ku, Osaka-shi, Osaka, 540-6207 (JP); MORI, Daisuke, Chuo-ku, Osaka-shi, Osaka, 540-6207 (JP)
(74) Representative: Betten & Resch
(86) International application number: PCT/JP2006/305158
(87) International publication number: WO 2007/055036

(57) **Abstract**

Provided is an active button including a contents output unit for outputting contents, and a button for acting, when selected, as a trigger to make access to a specific information source registered. Further included is means for acquiring button recommending information indicating that the specific information source can provide information relating to the contents. In case the button recommending information is acquired, a button mode is changed to inform a viewer of that acquisition.

## Description

### BACKGROUND OF THE INVENTION

### Field of the Invention

The present invention relates to an acquisition apparatus for content-related information comprising a button, in which variations of a form of the button indicate that a specific information source can provide content-related information.

### Description of the Related Art

Conventionally, in an internet website etc, in addition to a main content to be browsed by a user, other information or advertisements related to the content, and recommended information palatable to the user are generally presented. Additionally, in recent years, digital TV broadcasting has started, and it is possible to simultaneously provide not only TV programs but also various kinds of information such as data broadcasting, program information such as EPG (Electronic Program Guide), or network content. For example, in Japanese Unexamined Patent Application Publication No. 2005-157690, an electronic apparatus, which can simultaneously display a TV program and web pages relating to the currently broadcasted TV program on a screen side-by-side, is disclosed.

However, a viewer who views content, does not always desire the related information, thereby creating a deficiency if the content and the related information are displayed by separating a display area of the screen as described in Japanese Unexamined Patent Application Publication No. 2005-157690, the display area for the content is reduced, thereby diminishing viewability. Further, if web content is displayed on a screen of a digital TV without change, image degradation is caused due to low resolution. Therefore, in the presentation method for the related information as described in Japanese Unexamined Patent Application Publication No. 2005-157690, there is, indeed, a merit for a provider of the content or the related information in terms of advertising effect etc., but when the viewer does not desire the related information, the presentation rather disturbs viewing of the content in many cases.

### SUMMARY OF THE INVENTION

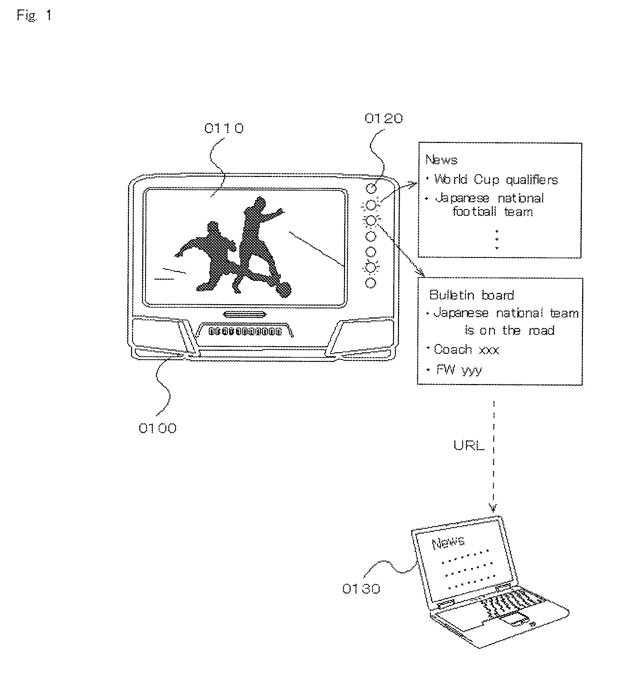

In order to solve the above deficiencies, the present invention provides an acquisition apparatus for content-related information, which is capable of outputting content to a display etc., and of comprising a button, in which variations of a form of the button indicates that a specific information source can provide content-related information. The button is to be a trigger for accessing to a registered specific information source when selected. Fig. 1 is a schematic diagram of a device for controlling an acquisition apparatus for content-related information of the present invention. An acquisition apparatus for content-related information (0100) comprises an 'output unit for content' (0110), and a 'button' (0120). The 'button' (0120) is correlated with a specific information source, and indicates that the specific information source can provide information related to content (hereinafter, referred to as 'content-related information'). For example, a live football program is displayed on the output unit for content (0110), and a second and third button (0120) light up. In this case, for example, the second button is correlated with a web page of news relating to football in a news site, and the third button is correlated with a web page of a bulletin board relating to football in a bulletin board site. Although not indicated in Fig. 1, the information source correlated with the button may be indicated beside the button. If the user, who views the content, selects the second button, for example, URL (Uniform Resource Locator) of the web page of news relating to football in a news site is outputted from the acquisition apparatus for content-related information (0100) via communication etc., the user can view the page by utilizing the outputted URL via the personal computer (0130) etc. The content-related information may be directly displayed on the output unit for content (0110) of the acquisition apparatus for content-related information without accessing from other apparatus such as the personal computer (0130). For example, the related information may be displayed as a replacement of the currently displayed content, or may be displayed with the content by separating the display area of the screen. Moreover, it is useful that resolution information of the related information etc. is simultaneously acquired, and it is determined according to the resolution as to whether the related information is outputted to the content-related information (0110) or is accessed from the external apparatus. Note that the access processing may be a processing of viewing the related information as shown in Fig. 1, or may be a processing of voting in a popularity vote, or a processing of settlement for shopping. The specific information source may be predetermined, may be arbitrarily varied by a user, or may be varied according to the content outputted to a display etc.

As described above, according to the acquisition apparatus for content-related information of the present invention, it is possible to access to the related information when the user wishes to utilize the related information notifying a presence of the related information to the user viewing the content. Moreover, it is possible not only to display the related information by the acquisition apparatus for content-related information but also to access to the related information via another personal computer etc., so that it is possible to access by an appropriate method even if resolution etc. is different according to type of the related information.

### BRIEF DESCRIPTION OF THE DRAWINGS

Fig. 1 is a schematic diagram of a device for controlling an acquisition apparatus for content-related information of the present invention.
Fig. 2 is a functional block diagram of the acquisition apparatus for content-related information of a first embodiment.
Fig. 3 is a diagram showing a general configuration of a computer.
Fig. 4 is a diagram exemplifying content.
Fig. 5 is a diagram exemplifying a configuration of a storage unit for button information.
Fig. 6 is a diagram showing a case where a button is configured by a configuration unit for button.
Fig. 7 is a diagram exemplifying processing in a variation unit for button form.
Fig. 8 is a flowchart showing a processing in the acquisition apparatus for content-related information of the first embodiment.
Fig. 9 is a functional block diagram of the acquisition apparatus for content-related information of a second embodiment.
Fig. 10 is a diagram showing a case where information regarding presentation of button is generated based on a computation result of the information regarding selection of button.
Fig. 11(a) and (b) are flowcharts showing processing in the acquisition apparatus for content-related information of the second embodiment.
Fig. 12 is a functional block diagram of the acquisition apparatus for content-related information of a third embodiment.
Fig. 13 is a diagram exemplifying processing in a management unit for button information;
Fig. 14 is a functional block diagram of the acquisition apparatus for content-related information of a fourth embodiment.
Fig. 15 is a diagram exemplifying processing in an acquisition unit for identification information of information source.
Fig. 16 is a diagram exemplifying processing in a registration unit.
Fig. 17 is a flowchart showing processing relating to the acquisition unit for identification information of information source and to the registration unit of the acquisition apparatus for content-related information of the fourth embodiment.
Fig. 18 is a functional block diagram of the acquisition apparatus for content-related information of a fifth embodiment.
Fig. 19 is a diagram exemplifying an indication by means for displaying information source.
Fig. 20 is a functional block diagram of the acquisition apparatus for content-related information of a sixth embodiment.
Fig. 21 is a diagram exemplifying a process in settlement button means.
Fig. 22 is a flowchart showing a processing in the acquisition apparatus for content-related information of the first embodiment.

### DETAILED DESCRIPTION OF THE PREFERRED EMBODIMENTS

Embodiments of the present invention will be described hereinbelow with reference to the drawings. The present invention is not to be limited to the above embodiments and able to be embodied in various forms without departing from the scope thereof.

### <<First embodiment>>

### <Concept of First Embodiment>

A first embodiment of the present invention is an acquisition apparatus for content-related information, which is capable of outputting content to a display etc., and of comprising a button, in which variation of a form of the button indicates that a specific information source can provide content-related information. The button is to be a trigger for accessing to a registered specific information source when selected.

### <Configuration of First Embodiment>

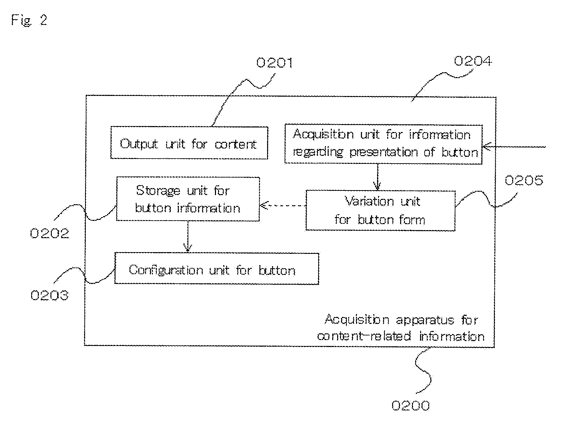

Fig. 2 is a functional block diagram of the acquisition apparatus for content-related information of the first embodiment. An acquisition apparatus for content-related information (0200) comprises an 'output unit for content' (0201), a 'storage unit for button information' (0202), a 'configuration unit for button' (0203), an 'acquisition unit for information regarding presentation of button' (0204), and a 'variation unit for button form' (0205). An example of the acquisition apparatus for content-related information (0200) include an electronic device such as a digital TV, a personal computer, a mobile phone, or a PDA, which can read broadcast, communication, and/or media etc., thereby acquiring content, and can display the acquired content.

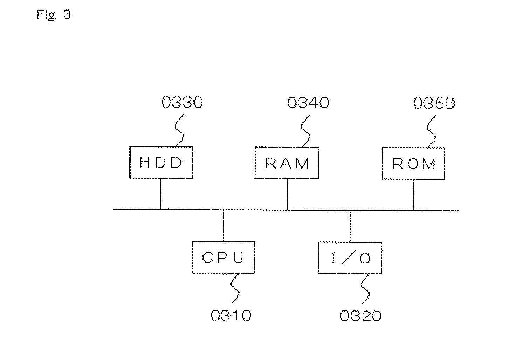

Note that the respective units of the present invention are configured by hardware, software, or both hardware and software. For example, in the case of using a computer, the respective units are implemented by the hardware configured by a CPU, a memory, a bus, an interface, and other peripheral devices etc., and by the software operable on the hardware. Specifically, by sequentially carrying out programs on the memory, the data on the memory and the data inputted via the interface are processed, stored, and outputted etc., thereby implementing functions of the respective components. Specifically, Fig. 3 is a diagram showing a general configuration of a computer. In Fig. 3, the computer comprises a CPU (0310), an input/output interface (I/O) (0320), a hard disk (HD) (0330), a RAM (0340), a ROM (0350) etc., and the acquisition apparatus for content-related information of the present invention is implemented by the same configuration of Fig. 3 (the same applies throughout the entire specification).

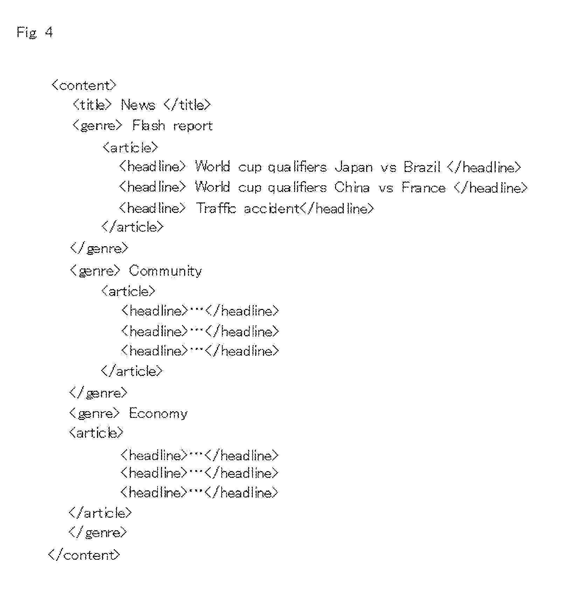

The output unit for content (0201) has a function of outputting content based on acquired content information. The 'content information' is information for configuring content, and specifically includes image data, audio data, and data for data broadcasting etc. In addition, the content information may be acquired from the external such as a broadcast station or content provider, or from storage medium etc. in the acquisition apparatus for content-related information. In addition, the content information may be acquired via wired communication or wireless communication. In the case of wired communication, a cable TV, and a wired network communication are cited, and in the case of wireless communication, a terrestrial digital broadcasting, satellite digital broadcasting, and wireless network communication are cited. In addition, the 'content' includes video, audio, and music, and further includes textual information, and application program. Specifically, a TV program, TV program information such as EPG, data broadcasting, and video content or still image content etc., which are distributed on the network are cited. Fig. 4 shows a case where content is expressed by XML (extensible Markup Language). Details of content is expressed between <content> and </content>, and Fig 4 shows a case where the content is news. In addition, a pointer (e.g., URL) to information of the content may be arranged. As an output method of the content, the content may be displayed on a display screen, or only sound may be outputted from a speaker. Specifically, in the output unit for content, for example, image data etc., inputted via an input interface such as a video input terminal, is stored in a predetermined storage area such as a HDD or a RAM. Subsequently, for example, the image data is read from the predetermined storage area, which storing the image data, and is sent to a graphic card. The image data, sent to the graphic card, is drawn on a graphic memory by GPU (Graphic Processor Unit), and after that, is converted to a display output signal by analog conversion etc. according to necessity, thereby being outputted to the display. In addition, the output unit for content may include a program to cause a CPU to execute such processing.

The 'storage unit for button information' (0202) has a function of storing button information for configuring a button, which is to be a trigger for accessing to a registered specific information source when selected. The 'button', configured by the storage unit for button information, may be graphically represented as an icon, and selected by a keyboard, a mouse, a touch panel, a pen tablet, or a joy stick etc., or may be a mechanical button selected by being pressed by user's finger. Further, a plurality of buttons may be provided. The 'registered specific information source' may be preset and unchangeable, may be arbitrarily set and changed by a user, or may be automatically set and changed by the acquisition apparatus for content-related information. Similar to the content, the 'information source' includes a Web site, a TV program, TV program information such as EPG, data broadcasting, or a server apparatus or a broadcast station etc., which provides the above. Actually, the information source is expressed by link information such as URL, IP address, or a server name. The 'access processing' includes not only direct access to the specific information source but also processing for the access. In the processing for the access, for example, as shown in Fig. 1, when accessing to the information source from another apparatus such as a personal computer, URL etc., indicating the information source is outputted to the personal computer. Note that, the button may be selectable only when its form changes, or may be selectable without change of its form. In cases where the button is selectable without change of its form, it is possibly uncertain whether the specific information source can provide the related information, so that access to a predetermined link (e.g., a top page of Web site) may be carried out when the button is selected.

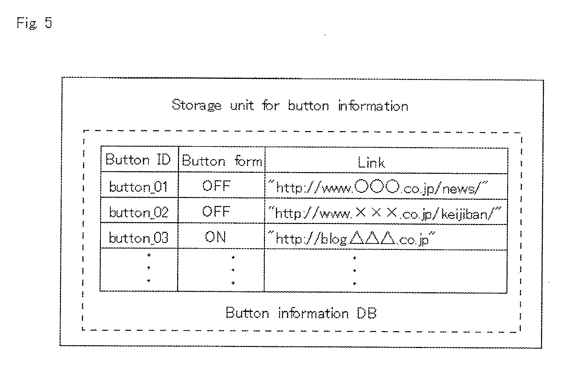

Fig. 5 shows a concrete example of the storage unit for button information. Fig. 5 shows a case where the button information is configured in a database, a button information DB. A button ID is identification information for identifying respective buttons, and a button form is information indicating respective button forms. In Fig. 5, for example, if the button lights up, 'ON' is indicated, and if not, 'OFF' is indicated. The link is information indicating a specific information source correlated with the respective buttons. Therefore, the 'button information' is information, in which the above information is correlated. Thus, the storage unit for button is implemented by storing the button information as a database etc. in a predetermined storage area such as HDD, RAM, or ROM.

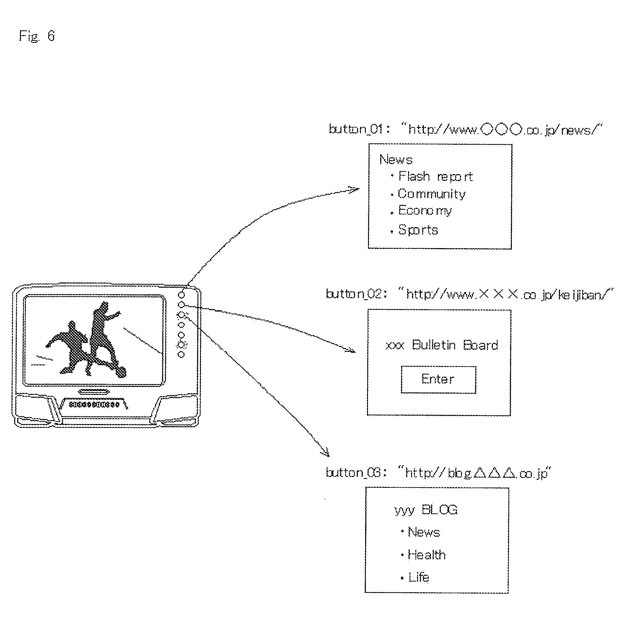

The 'configuration unit for button' (0203) has a function of configuring the button based on the button information stored by the storage unit for button information. The term 'configuring the button based on the button information' means that, for example, a program is set so that a processing of outputting link information is executed due to selection of the button. Fig. 6 is a diagram showing a case where a button is configured by a configuration unit for button. For example, in cases where the button information is configured as in Fig. 5, if the button IDs are assigned as 'button_01 ', 'button_02', 'button_03' and so on in descending order, and the first button is selected by clicking etc., the 'button_01' is acquired as the button ID, and a character string "http://www.xxx.cojp/news/' is extracted as link information. Subsequently, if the second button is selected by clicking etc., the 'button_02' is acquired as the button ID, and a character string 'http://www.yyy.co.jp/keijiban/' is extracted as link information. Further, the third button is selected by clicking etc., the 'button_03' is acquired as the button ID, and a character string 'http://blog.zzz.co.jp' is extracted. More specifically, the configuration unit for button may include a program to configure a button. For example, in cases where the button is graphically expressed as an icon, when describing HTML (HyperText Markup Language), XML, and BML (Broadcast Markup Language) etc. as data for display, image data of each button, acquired from the predetermined storage area such as ROM or HDD, is correlated with the information such as the button ID, the button form, and the link, which are assigned to each button, and is described, so that each button is displayed on the screen.

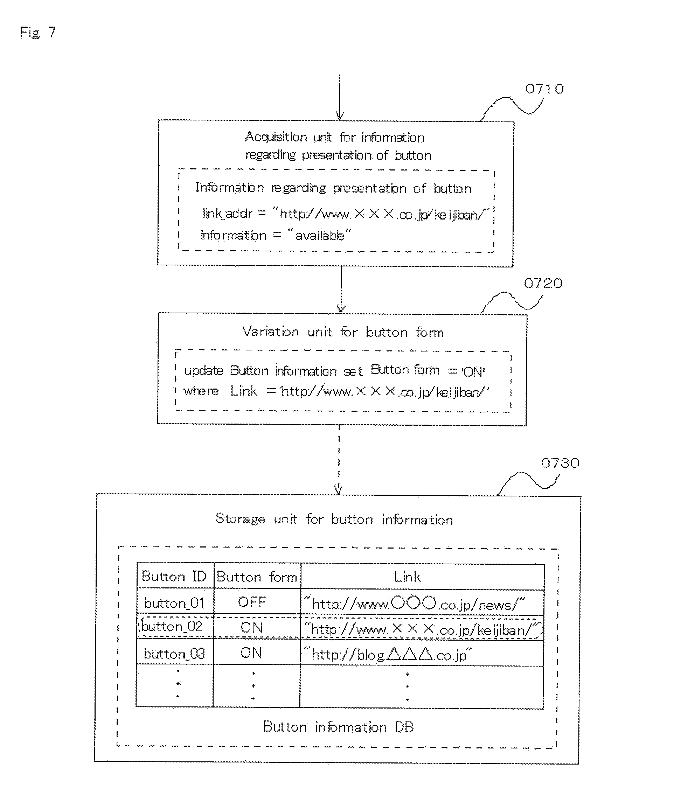

The 'acquisition unit for information regarding presentation of button' (0204) has a function of acquiring information regarding presentation of button, which is information indicating that the specific information source can provide content-related information. The 'information regarding presentation of button' is, for example, information as shown in Fig. 7. The 'link_addr' and 'information' are variables of a program, and the 'link_addr' indicates the link correlated with the button, and the 'information' indicates that value is 'available', and the content-related information can be provided in the link indicated by the 'link_addr'. Further, the information regarding presentation of button may be acquired via wired communication or wireless communication. Specifically, in the acquisition unit for information regarding presentation of button, for example, information regarding presentation of button, inputted via an input interface such as a network card, is stored in a predetermined storage area such as a HDD or a RAM. In addition, the acquisition unit for information regarding presentation of button may include a program to cause a CPU to execute such processing.

The 'variation unit for button form' (0205) has a function of varying a button form of the button when acquiring the information regarding presentation of button. It is enough that the 'button form' is capable of indicating that specific information source can provide content-related information, and for example, the indication may be carried out by lighting up or blinking the button, or by varying illumination color of the button. In addition, if the button is graphically displayed, the indication may be carried out by varying the button form. The term 'varying a button form of the button when acquiring the information regarding presentation of button' includes the case where the button form is varied by variation of the button information stored in the storage unit for button information (0202), and the case where only the button form is varied without variation of the button information. In cases where the button information is varied, for example, as shown in Fig. 5, the value of the 'button form' in the button information is set to 'ON', and the button lights up due to setting 'ON' as a trigger. Further, in cases where the button information is not varied, for example, if the button is a mechanical button and lights up by utilizing LED etc., a program for controlling hardware to light up the LED etc. is directly operated, thereby lighting up the button. In addition, the term 'the button' corresponds to a button, to which the information regarding presentation of button relates. Fig. 7 is a diagram exemplifying processing in a variation unit for button form. At the outset, an acquisition unit for information regarding presentation of button (0710) acquires information 'link_addr="http://www.yyy.co.jp/keijiban/" and "information= 'available" as the information regarding presentation of button. Subsequently, in a variation unit for button form (0720), for example, a SQL query, 'update button information set button form='ON' where link='http://www.yyy.cojp/keijiban/", is generated and executed for a button information table in the button information DB, stored in a storage unit for button information (0730). Subsequently, the button form of the button, having the link 'http://www.yyy.co.jp/keijiban/', and the button ID 'button_02', is set to 'ON', thereby lighting up the second button based on the button information varied by the configuration unit for button. More specifically, the variation unit for button form may include a program to vary the button form. For example, the information regarding presentation of button, stored in the predetermined storage area such as HDD or RAM by the acquisition unit for information regarding presentation of button (0204), is read, the above update query is generated at the link etc., which has been readout, and the generated query is executed for the button information database, stored in the predetermined storage area such as HDD, RAM, or ROM by the storage unit for button information (0202).

### <Processing Flow of First Embodiment>

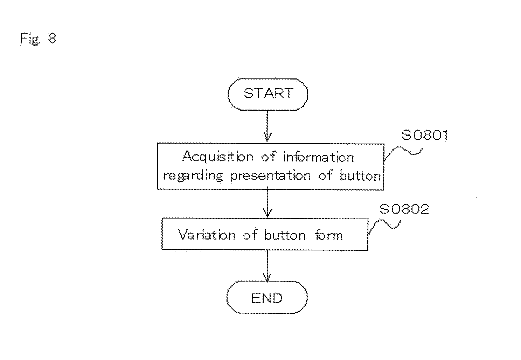

Fig. 8 is a flowchart showing a processing in the acquisition apparatus for content-related information of the first embodiment.

At the outset, the information regarding presentation of button is acquired. The acquisition unit for information regarding presentation of button mainly carries out this processing (step S0801).

Subsequently, based on the information regarding presentation of button, acquired by the step S0801, the button form is varied. The variation unit for button form mainly carries out this processing (step S0802).

### <Brief Description of Effects of First Embodiment>

The acquisition apparatus for content-related information of the first embodiment can output content to a display etc., vary a button form of more than and equal to one button provided to the apparatus, thereby notifying a user that it is possible to view content-related information at a specific information source, correlated with each button. Moreover, the user can notice a presence of the content-related information by the variation of the button form, can access to the specific information source, which provides the related information, by selecting the button, thereby acquiring the information.

### <<Second embodiment>>

### <Concept of Second Embodiment>

In an acquisition apparatus for content-related information of a second embodiment, in addition to the function of the acquisition apparatus for content-related information of the first embodiment, information regarding selection of button, which is information indicating the selection of the button when the button has been selected, is outputted to a predetermined computation server, and the information regarding presentation of button is generated based on a computation result by the computation server.

### <Configuration of Second Embodiment>

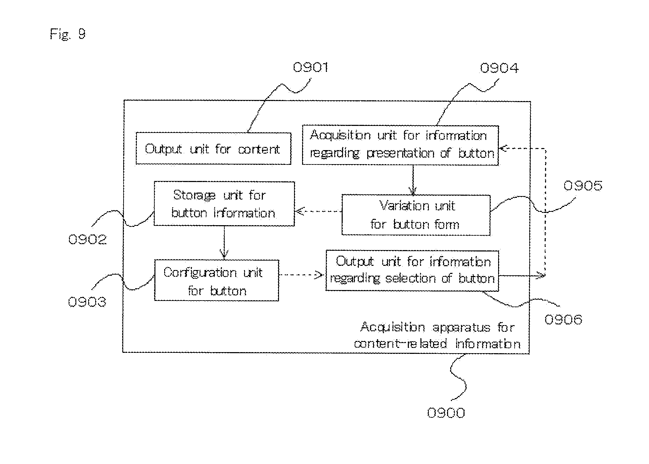

Fig. 9 is a functional block diagram of the acquisition apparatus for content-related information of the second embodiment. An acquisition apparatus for content-related information (0900) comprises an 'output unit for content' (0901), a 'storage unit for button information' (0902), a 'configuration unit for button' (0903), an 'acquisition unit for information regarding presentation of button' (0904), a 'variation unit for button form' (0905), and an 'output unit for information regarding selection of button' (0906). Therefore, the acquisition apparatus for content-related information of the second embodiment has a configuration, in which the 'output unit for information regarding selection of button' (0906) is added to the configuration of the acquisition apparatus for content-related information of the first embodiment.

The 'output unit for information regarding selection of button' (0906) outputs information regarding selection of button, which is information indicating the selection of the button when the button has been selected, to a predetermined computation server. Specifically, the 'information regarding selection of button' is information indicating which button has been selected, or information indicating a link correlated with the selected button. For example, in cases where the predetermined information source, correlated with each button, is fixed and unchangeable, by storing the button ID correlated with the link in the computation server, it is possible to output information such as the button ID, indicating the selected button, from the output unit for information regarding selection of button, and to determine the accessed link by utilizing the button ID in the computation server according to necessity. Additionally, if the output unit for information regarding selection of button outputs the link, correlated with the selected button, it becomes unnecessary to acquire the link by the computation server. Specifically, in the output unit for information regarding selection of button, for example, due to the selection of the button as a trigger, the button ID and the link of the selected button are read from a predetermined storage area such as HDD, RAM or ROM. and are outputted to the computation server via an output interface such as a network card. In addition, the output unit for information regarding selection of button may include a program to cause a CPU to execute such processing.

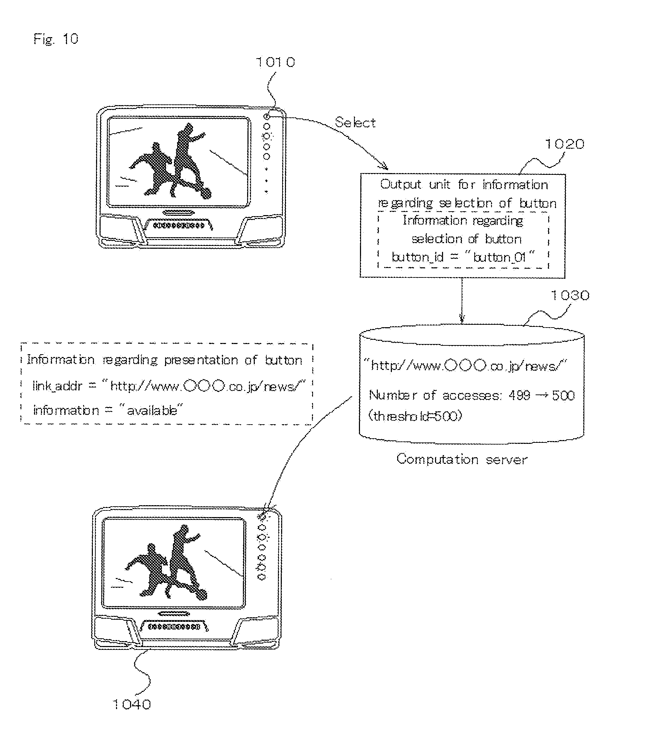

In addition, the information regarding presentation of button is generated based on a computation result of the information regarding selection of button, outputted by the output unit for information regarding selection of button (0906). A concrete example is shown in Fig. 10. Fig. 10 is a diagram showing a case where information regarding presentation of button is generated based on a trigger, which indicates that a value of the computation result of the information regarding selection of button by the computation server, outputted by the output unit for information regarding selection of button (0906), exceeds threshold. For example, the first button (1010) is selected, and the information regarding selection of button, 'button_id='button_01" is outputted to the computation server (1030) by the output unit for information regarding selection of button (1020). Hereat, 'button_id' is a variable on the program. The computation server (1030) stores, for example, the information, in which the button ID and the link are correlated, and it is possible to acquire the link, 'http://www.xxx.co.jp/news/', by utilizing the information regarding selection of button, 'button_id='button_01". In addition, for example, in the computation server (1030), number of accesses is counted with respect to each information source, and one access number is added with respect to each output of the information regarding selection of button. Hereat, if the threshold is set to 500, based on a trigger indicating that the number of accesses reaches to 500, the information regarding presentation of button, 'link_addr="http://www.xxx.co.jp/news/" and "information= 'available", is generated, and is outputted to the acquisition apparatus for content-related information (1040). In the acquisition apparatus for content-related information (1040), the information regarding presentation of button is acquired, so that the first button lights up etc. According to the above configuration, for example, it is possible to present a website accessed from many users as the related information. In addition, for example, in cases where a website of a popularity vote is linked, if the information regarding presentation of button is generated based on a trigger, which indicates that a number of votes to any candidate exceeds a threshold, and is outputted, it is possible to notify the user of the acquisition apparatus for content-related information that a result of the vote has been determined or is being determined. Note that, in the acquisition apparatus for content-related information of the first embodiment, there is a possibility that the user presses the button several times, so that the button form may vary several times. For example, a way of blinking of the button, a color of the button, or a form of the button may vary.

### <Processing Flow of Second Embodiment>

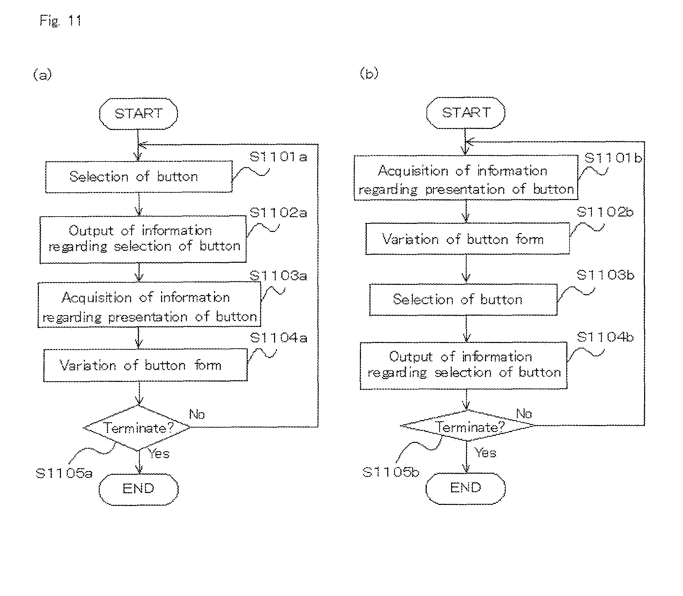

Fig. 11(a) and (b) are flowcharts showing processing in the acquisition apparatus for content-related information of the second embodiment. Fig. 11(a) shows a case where the button is selected by a user before the button form varies, and Fig. 11(b) shows a case where the button is selected by a user after the button form varies.

First, Fig. 11(a) is described.

At the outset, the button is selected (step S1101a).

Subsequently, based on the selection of the button by step S1101a, the information regarding selection of button is outputted to a predetermined computation server. The output unit for information regarding selection of button mainly carries out this processing (step S1102a).

Subsequently, the information regarding presentation of button, which has been generated based on a computation result of the information regarding selection of button outputted by step S1102a, is acquired. The acquisition unit for information regarding presentation of button mainly carries out this processing (step S1103a).

Subsequently, based on the information regarding presentation of button, acquired by step S1103a, the button form is varied. The variation unit for button form mainly carries out this processing (step S 1104a).

Finally, it is determined whether the processing is terminated. If the acquisition apparatus for content-related information is powered off, the processing is terminated. If it is determined that the processing has not been terminated, the processing returns to step S1101a (step S 1105a).

Next, Fig. 11 (b) is described.

At the outset, the information regarding presentation of button is acquired. The acquisition unit for information regarding presentation of button mainly carries out this processing (step S1101b).

Subsequently, based on the information regarding presentation of button, acquired by the step S1101b, the button form is varied. The variation unit for button form mainly carries out this processing (step S1102b).

Subsequently, the button, of which form has been varied by step S1102b, is selected (step S1103b).

Subsequently, based on the selection of the button by step S1103b, the information regarding selection of button is outputted to a predetermined computation server. The output unit for information regarding selection of button mainly carries out this processing (step S1104b).

Finally, it is determined whether the processing is terminated. If the acquisition apparatus for content-related information is powered off, the processing is terminated. If it is determined that the processing has not been terminated, the processing returns to step S1101b (step S1105b).

### <Brief Description of Effects of Second Embodiment>

According to the acquisition apparatus for content-related information of the second embodiment, it is possible to present a website accessed from many users as the related information. Moreover, for example, in cases where a website of popularity vote is linked to the button, if the information regarding presentation of button is generated based on a trigger, which indicates that a number of votes to any candidate exceeds a threshold, and is outputted, it is possible to notify the user of the acquisition apparatus for content-related information that a result of the vote has been determined or is being determined.

### <<Third embodiment>>

### <Concept of Third Embodiment>

In an acquisition apparatus for content-related information of a third embodiment, in addition to the function of the acquisition apparatus for content-related information of the first or second embodiment, it is possible to manage the button information, stored in the storage unit for button information.

### <Configuration of Third Embodiment>

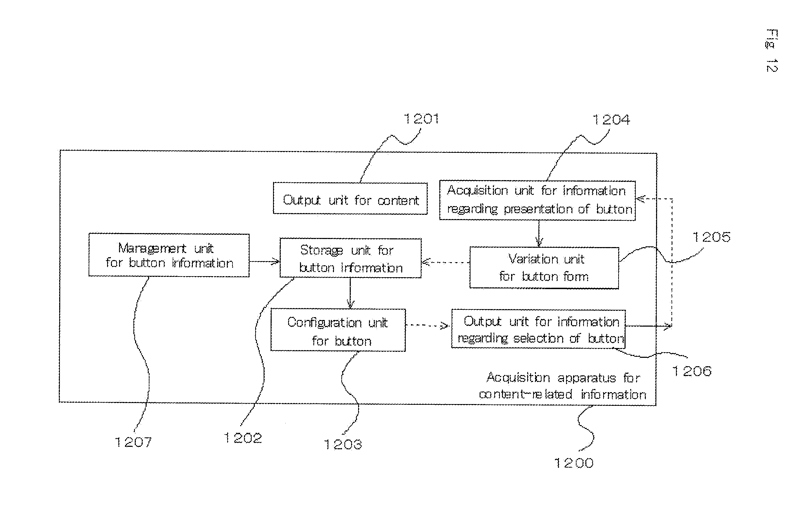

Fig. 12 is a functional block diagram of the acquisition apparatus for content-related information of the third embodiment. The acquisition apparatus for content-related information of the third embodiment has a configuration, in which a 'management unit for button information' (1207) is added to the configuration of the acquisition apparatus for content-related information of the first or second embodiment. Fig. 12 shows the configuration, in which the 'management unit for button information' (1207) is added to the configuration of the acquisition apparatus for content-related information of the second embodiment. An acquisition apparatus for content-related information (1200) comprises an 'output unit for content' (1201), a 'storage unit for button information' (1202), a 'configuration unit for button' (1203), an 'acquisition unit for information regarding presentation of button' (1204), a 'variation unit for button form' (1205); an 'output unit for information regarding selection of button' (1206), and the 'management unit for button information' (1207).

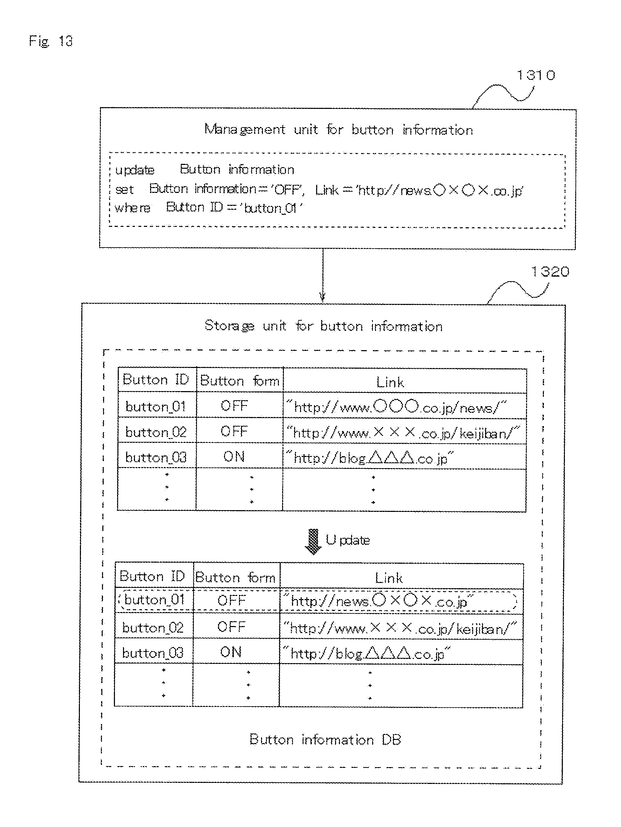

The 'management unit for button information' (1207) has a function of managing the button information, stored in the storage unit for button information. The 'management' means any one or more of addition, deletion, or change. Therefore, by 'managing the button information', the link and the button form, correlated with each button, are varied by the variation unit for button form. Further, the button information may be managed by the user, or may be automatically managed by the acquisition apparatus for content-related information. Therefore, there may be various triggers and timings for management. Fig. 13 shows a concrete example of the management unit for button information. For example, Fig. 13 shows a case where the link of the button ID 'button_01' is varied. In the management unit for button information (1310), for example, a SQL query, 'update button information set button form='OFF', link='http://news.xyxy.co.jp' where button ID='button_01", is generated and executed for a button information table in the button information DB, stored in a storage unit for button information (1320). Therefore, the button form of the button having the button ID 'button_01' is changed to 'OFF', and the link is changed to 'http://news.xyxy.co.jp. Note that, in the third embodiment, the link is changed, so that the button form is initialized to 'OFF'. Further, the management unit for button information may be provided with user interface etc. for management. For example, the button ID, the button form, and the link can be set by selection through a radio button or a pulldown menu, or by text input etc., and the above SQL queries such as update, delete, and insert are generated and executed based on the data inputted through the management screen, so that the user who is unfamiliar with the SQL query can easily manage. More specifically, the management unit for button information may include a program to execute such processing. For example, the respective data, set through the above management screen, such as the button ID, the button form, and the link are stored in a predetermined storage area such as a RAM. Such data are read from the predetermined storage area, and the above update query is generated, so that the generated query is executed for the button information database, stored in the predetermined storage area such as HDD, RAM, or ROM by the storage unit for button information (1202).

### <Processing Flow of Third Embodiment>

The processing in the acquisition apparatus for content-related information of the third embodiment is the same as that in acquisition apparatus for content-related information of the first or second embodiment.

### <Brief Description of Effects of Third Embodiment>

According to the acquisition apparatus for content-related information of the third embodiment, it is possible to manage the button information stored in the storage unit for button information. For example, it is possible to set the link with respect to each acquisition apparatus for content-related information according to the user's taste, or to set the information source, which the user wishes to use.

### <<Fourth embodiment>>

### <Concept of Fourth Embodiment>

A fourth embodiment of the present invention is an acquisition apparatus for content-related information, which can extract a keyword from the acquired content information, and can determine and register a specific information source based on the extracted keyword. Therefore, the specific information source is determined according to details of the content, thereby setting the information source, which has stronger relation with the content.

### <Configuration of Fourth Embodiment>

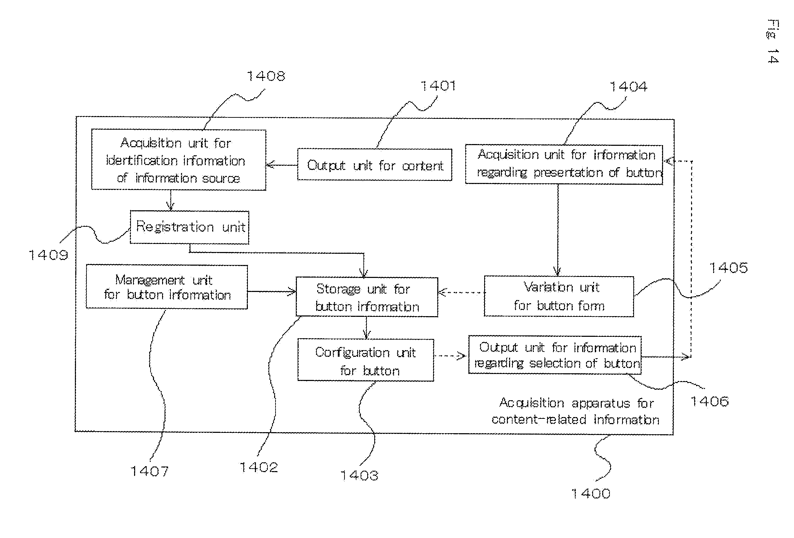

Fig. 14 is a functional block diagram of the acquisition apparatus for content-related information of the fourth embodiment. The acquisition apparatus for content-related information of the fourth embodiment has a configuration, in which an 'acquisition unit for identification information of information source' (1408), and a 'registration unit' (1409) are added to the configuration of the acquisition apparatus for content-related information any one of the first to third embodiments. Fig. 14 shows the configuration, in which the 'acquisition unit for identification information of information source' (1408), and the 'registration unit' (1409) are added to the configuration of the acquisition apparatus for content-related information of the third embodiment. An acquisition apparatus for content-related information (1400) comprises an 'output unit for content' (1401), a 'storage unit for button information' (1402), a 'configuration unit for button' (1403), an 'acquisition unit for information regarding presentation of button' (1404), a 'variation unit for button form' (1405), an 'output unit for information regarding selection of button' (1406), a 'management unit for button information' (1407), the 'acquisition unit for identification information of information source' (1408), and the 'registration unit' (1409).

The 'acquisition unit for identification information of information source' (1408) has a function of extracting a keyword from the acquired content information, and acquiring identification information of information source in order to identify the information source, which can provide content-related information, based on the extracted keyword. The 'acquired content information' mainly corresponds to image data, audio data, and data for data broadcasting, and may be content itself outputted by the 'output unit for content' (1401) based on the content information. Therefore, for example, the keyword may be extracted from the content information by morphological analysis or syntax analysis etc., or the character string may be extracted by scanning the content displayed on the display screen etc., by utilizing OCR (Optical Character Reader). The terms 'based on the extracted keyword' corresponds, for example, to a case where the acquisition apparatus for content-related information or an external apparatus etc. stores the information source correlated with the keyword, thereby extracting the information source, correlated with the keyword extracted from the content information. The 'identification information of information source' may be an identifier, or may be information directly indicating the information source such as URL, IP address, or server name.

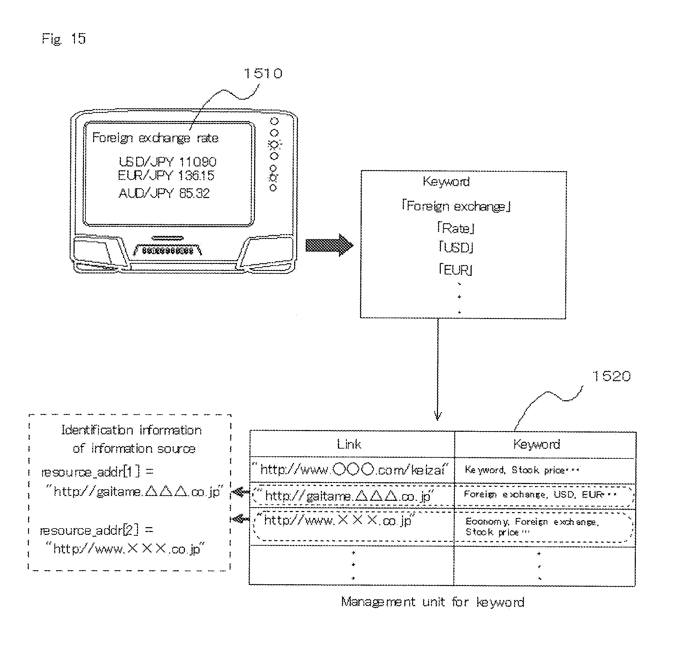

Fig. 15 is a diagram exemplifying processing in an acquisition unit for identification information of information source. The content indicating foreign exchange rate is displayed on a display (1510) of the acquisition apparatus for content-related information. From this content, keywords such as 'foreign exchange', 'rate', 'U.S. Dollar', and 'Euro' are extracted, and are outputted to a management apparatus for keyword as an external apparatus. Therefore, in the management apparatus for keyword, a database etc. (1520), in which the link and the keyword are correlated, is stored, and the links 'http://gaitame.xzz.co.jp/' and 'http://www.yyy.co.jp/' are extracted from the outputted keywords. Therefore, for example, the identification information of information source, 'resource_addr'1'='http://gaitame.zzz.co.jp/'' and 'resource_addr'2'='http://www.yyy.co.jp/", are outputted, and are acquired by the acquisition apparatus for content-related information. Note that the 'resource_addr' is an array type variable on a program. More specifically, the acquisition unit for identification information of information source may include a program to execute such processing. In cases where the identification information of information source is acquired from the external apparatus, for example, the content information stored in a predetermined storage area such as RAM is read out, and keyword is extracted by morphological analysis etc., and is stored in the predetermined storage area such as RAM. The stored keyword is read from the predetermined storage area, and is outputted to the external apparatus etc. via an output interface such as network card. In the external apparatus, to which the keyword has been outputted, generates and executes SQL query for the database etc., storing the information source correlated with the keyword, by utilizing the extracted keyword, thereby extracting the information source correlated with the extracted keyword, and outputting the information source to the acquisition apparatus for content-related information via an output interface such as network card. The acquisition apparatus for content-related information acquires the outputted information source from an input interface such as a network card, and stores it in the predetermined storage area such as RAM.

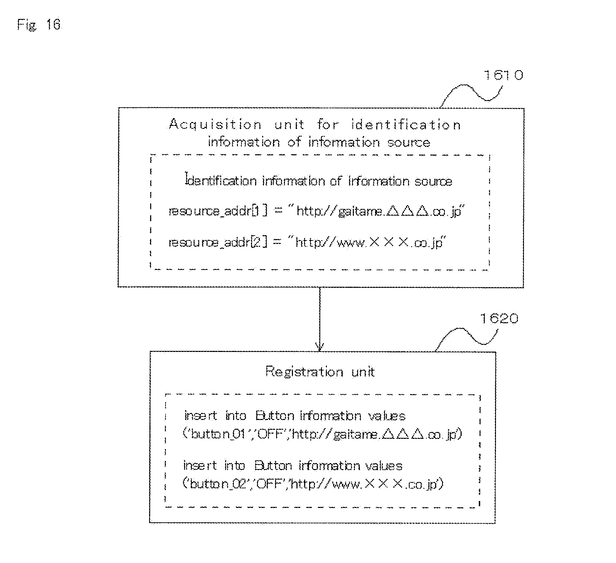

The 'registration unit' (1409) has a function of registering the information source, identified by the identification information of information source acquired by the acquisition unit for identification information of information source (1408). As to 'the information source, identified by the identification information of information source', in cases where the identification information of information source is the identifier, the acquisition apparatus for content-related information stores information for correlating the information source and the identifier, thereby specifying the information source identified by the identifier. Further, in cases where the identification information of information source is the information directly indicating the information source such as URL or IP address, the information source is directly specified by the identification information of information source. Fig. 16 shows a concrete example of a registration unit. For example, it is assumed that the acquisition unit for identification information of information source (1610) acquires the identification information of information source having the same details as that of Fig. 15. Therefore, in the registration unit (1620), for example, a SQL query, 'insert into button information values ('button_01, 'OFF', 'http://gaitame.zzz.co.jp)' and 'insert into button information values ('button_02, 'OFF', 'http:www.yyy.co.jp')', are generated and executed for a button information table in the button information DB, stored in the predetermined storage area such as HDD, RAM, or ROM etc. by a storage unit for button information (1402), thereby carrying out registration. More specifically, the registration unit may include a program to execute such processing. For example, the identification information of information source, stored in the predetermined storage area such as RAM, is read out by the acquisition unit for identification information of information source (1408), the above insert query is generated, and the generated insert query is executed for the button information database, stored in the predetermined storage area such as HDD, RAM, or ROM by the storage unit for button information (1402).

### <Processing Flow of Fourth Embodiment>

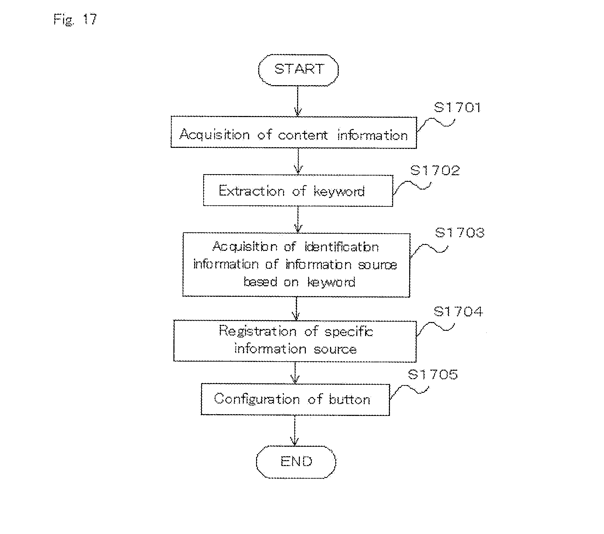

Fig. 17 is a flowchart showing processing relating to the acquisition unit for identification information of information source and to the registration unit of the acquisition apparatus for content-related information and of the fourth embodiment.

At the outset, content information is acquired (step S1701).

Subsequently, a keyword is extracted from the content information acquired by step S1701. The acquisition unit for identification information of information source mainly carries out this processing (step S1702).

Subsequently, the identification information of information source in order to identify the information source, which can provide content-related information, is acquired based on the keyword extracted by step S 1702. The acquisition unit for identification information of information source mainly carries out this processing (step S1703).

Subsequently, the information source, identified by the identification information of information source acquired by step S1703 is registered as a specific information source. The registration unit mainly carries out this processing (step S1704).

Finally, button is configured based on the specific information registered by step S1704 (step S1705).

### <Brief Description of Effects of Fourth Embodiment>

According to the acquisition apparatus for content-related information of the fourth embodiment, a specific information source is determined and is registered according to details of the content, so that the information source having stronger relation with the content is set, thereby increasing a possibility of providing the related information.

### <<Fifth embodiment>>

### <Concept of Fifth Embodiment>

A fifth embodiment of the present invention is an acquisition apparatus for content-related information having a function of displaying the information indicating an information source assigned to the button.

### <Configuration of Fifth Embodiment>

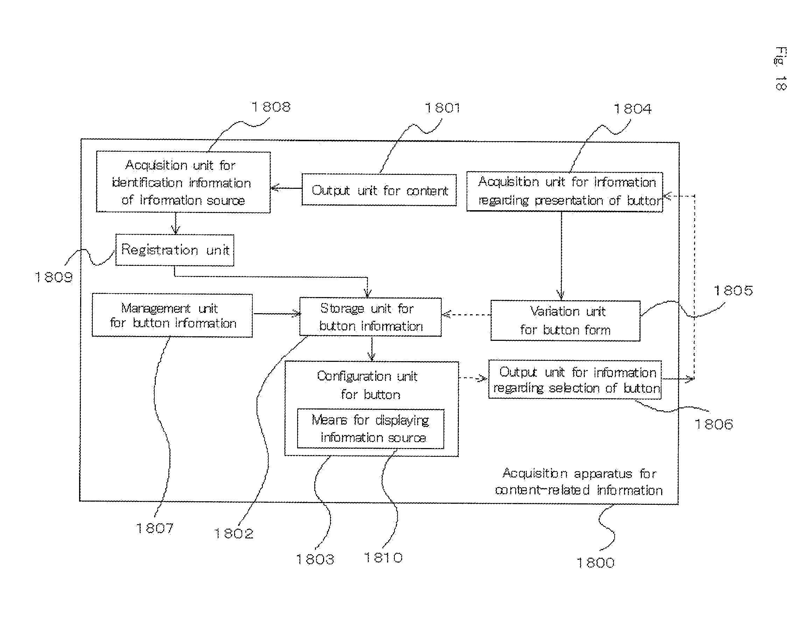

Fig. 18 is a functional block diagram of the acquisition apparatus for content-related information of the fifth embodiment. The acquisition apparatus for content-related information of the fifth embodiment has a configuration, in which 'means for displaying information source' (1810) is added to the configuration of the acquisition apparatus for content-related information of the fourth embodiment. An acquisition apparatus for content-related information (1800) comprises an 'output unit for content' (1801), a 'storage unit for button information' (1802), a 'configuration unit for button' (1803), an 'acquisition unit for information regarding presentation of button' (1804), a 'variation unit for button form' (1805), an 'output unit for information regarding selection of button' (1806), a 'management unit for button information' (1807), the 'acquisition unit for identification information of information source' (1808), and the 'registration unit' (1809). In addition, the 'configuration unit for button' (1803) comprises the 'means for displaying information source' (1810);

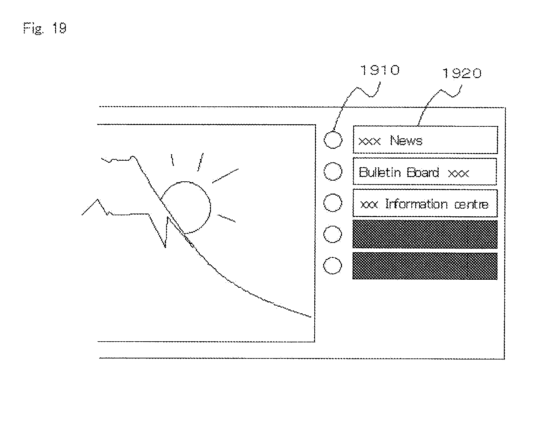

The 'means for displaying information source' (1810) has a function of displaying the identification information of information source assigned to the button. The 'information source assigned to the button' means the information source correlated with the button information stored in the storage unit for button information (1802). The terms 'displaying the identification information of information source assigned to the button' means that the display is carried out so that the correlation between the button and the identification information of information source is noticeable. For example, the identification information of information source is displayed beside the button, or a button number is indicated beside the button, and each button number and the identification information of information source is separately displayed. In addition, for example, name etc. such as a site name or a link address, which is understandable for a user, may be displayed as a substitute for the identification information of information source without displaying the identification information of information source itself. Fig. 19 shows a concrete example of means for displaying information source. Fig. 19 shows a case where name of the information source (1920), assigned to each button, is displayed beside each button (1910).

### <Processing Flow of Fifth Embodiment>

The processing in the acquisition apparatus for content-related information of the fifth embodiment is the same as that in acquisition apparatus for content-related information of the fourth embodiment. Note that in cases where the button is configured in step S1705, the identification information of information source is assigned to the button, and is displayed.

### <Brief Description of Effects of Fifth Embodiment>

According to the acquisition apparatus for content-related information of the fifth embodiment, the information of information source assigned to the button is displayed, thereby clearly indicating the information source assigned to the button.

### <<Sixth embodiment>>

### <Concept of Sixth Embodiment>

A sixth embodiment of the present invention is an acquisition apparatus for content-related information comprising a button capable of carrying out a settlement process due to the selection of the button.

### <Configuration of Sixth Embodiment>

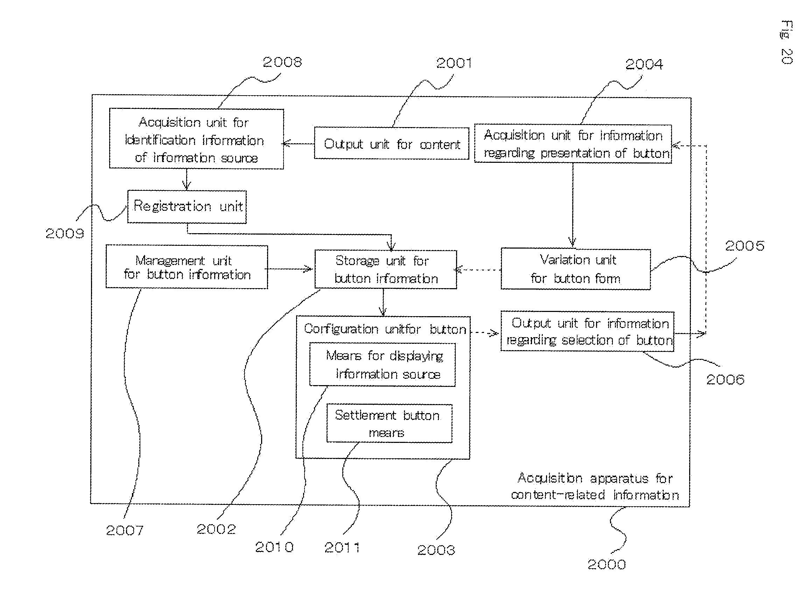

Fig. 20 is a functional block diagram of the acquisition apparatus for content-related information of the sixth embodiment. The acquisition apparatus for content-related information of the sixth embodiment has a configuration, in which 'settlement button means' (2011) is added to the configuration of the acquisition apparatus for content-related information of any one of the first to fifth embodiments. Fig. 20 shows the configuration, in which the 'settlement button means' (2011) is added to the configuration of the acquisition apparatus for content-related information of the fifth embodiment. An acquisition apparatus for content-related information (2000) comprises an 'output unit for content' (2001), a 'storage unit for button information' (2002), a 'configuration unit for button' (2003), an 'acquisition unit for information regarding presentation of button' (2004), a 'variation unit for button form' (2005), an 'output unit for information regarding selection of button' (2006), a 'management unit for button information' (2007), the 'acquisition unit for identification information of information source' (2008), and the 'registration unit' (2009). In addition, the 'configuration unit for button' (2003) comprises 'means for displaying information source' (2010), and the 'settlement button means' (2011).

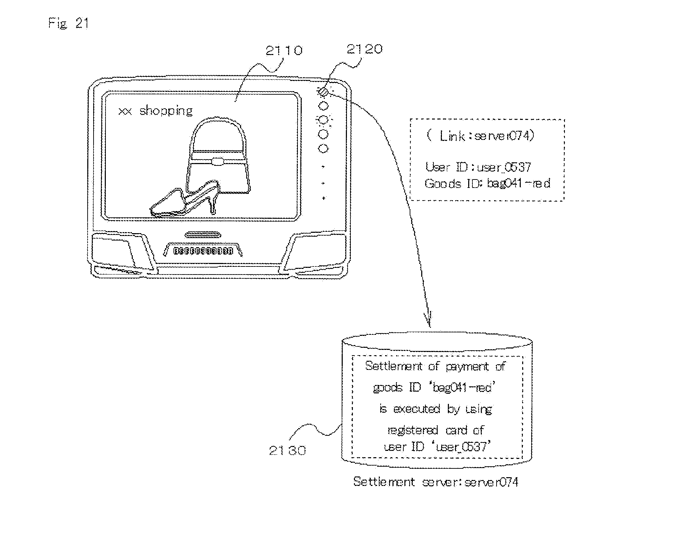

The 'settlement button means' (2011) has a function of carrying out a settlement process due to the selection of the button. The terms 'a settlement process' may include not only a settlement process itself but also a necessary process for the settlement process. For example, a process of outputting a goods ID correlated with identification information of a user in order to carry out settlement process in an external settlement server. As shown in Fig. 21, in cases where a shopping program is displayed as content (2110), and a user wishes to purchase the red bag introduced in the shopping program, for example, if a first button (2120) is correlated with the settlement server, the user selects the first button (2120). Therefore, due to the selection as a trigger, for example, data such as a server name 'server074' indicating a link, a user ID 'user_0537' indicating the user, and a goods ID 'bag041-red' indicting the goods to be purchased are outputted from the acquisition apparatus for content-related information. Therefore, in a settlement server 'server074' (2130), for example, a settlement process, 'settlement of payment of the goods ID 'bag041-red' by using a registered card of the user ID 'user_0537'', is carried out. Hereat, the settlement server stores information, in which the user ID and a credit card and a bank account number etc. are correlated. Further, in the acquisition apparatus for content-related information, for example, the user ID of the user who utilizes the acquisition apparatus for content-related information is registered and stored, thereby outputting the user ID along with the goods ID upon the selection of the button. In addition, the goods ID may be correlated with the button along with the link, or if the ID of the goods is included in the content information, the goods ID may be temporarily stored in a memory etc. upon changing goods introduced in the content (2110), and may be read out upon the selection of the button. More specifically, the settlement button means may include a program to execute such processing. For example, due to the selection of the button as a trigger, the user ID stored in the predetermined storage area such as HDD is read out. In addition, by utilizing the button ID indicating the selected button, a select query is executed for a button information table in the button information DB, stored in the predetermined storage area such as HDD, RAM, or ROM etc. by a storage unit for button information (1402), thereby reading out the link correlated with the selected button. In addition, the goods ID etc. of the goods to be settled is read out from the predetermined storage area such as RAM, and is outputted to the linked settlement server etc. with the user ID via a output interface such as a network card etc.

### <Processing Flow of Sixth Embodiment>

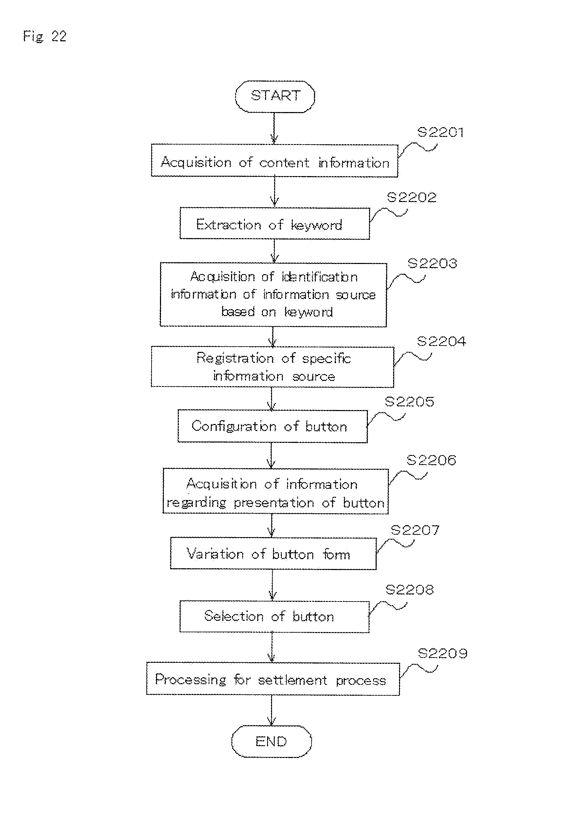

Fig. 22 is a flowchart showing a processing in the acquisition apparatus for content-related information of the sixth embodiment. Fig. 22 shows the case of Fig. 11(b) where the button is selected by a user after the button form varies.

At the outset, content information is acquired (step S2201).

Subsequently, a keyword is extracted from the content information acquired by step S2201. The acquisition unit for identification information of information source mainly carries out this processing (step S2202).

Subsequently, the identification information of information source in order to identify the information source, which can provide content-related information, is acquired based on the keyword extracted by step S2202. The acquisition unit for identification information of information source mainly carries out this processing (step S2203).

Subsequently, the information source, identified by the identification information of information source acquired by step S2203 is registered as a specific information source. The registration unit mainly carries out this processing (step S2204).

Subsequently, a button is configured based on the specific information registered by step S2204 (step S2205).

Subsequently, the information regarding presentation of button is acquired. The acquisition unit for information regarding presentation of button mainly carries out this processing (step S2206).

Subsequently, based on the information regarding presentation of button, acquired by step S2206, the button form is varied. The variation unit for button form mainly carries out this processing (step S2207).

Subsequently, the button, of which form has been varied by step S2207, is selected (step S2208).

Subsequently, based on the selection of the button by step S2208, a process for the settlement process is carried out. The settlement button means mainly carries out this processing (step S2209).

### <Brief Description of Effects of Sixth Embodiment>

According to the acquisition apparatus for content-related information of the sixth embodiment, it is possible to carry out settlement process by selecting the button, so that, in cases where content is a shopping program, it is possible for a user to complete a purchasing process only by selecting the button, thereby improving user-friendliness.

## Claims

1. An acquisition apparatus for content-related information, comprising:
an output unit for content, which outputs content based on acquired content information;
a storage unit for button information, which stores button information for configuring a button, which is to be a trigger for accessing to a registered specific information source when selected;
a configuration unit for button, which configures the button based on the button information stored by the storage unit for button information;
an acquisition unit for information regarding presentation of button, which acquires information regarding presentation of button, which is information indicating that said specific information source can provide content-related information; and
a variation unit for button form, which varies a button form of the button when acquiring the information regarding presentation of button.

2. The acquisition apparatus for content-related information according to Claim 1, further comprising:
an output unit for information regarding selection of button, which outputs information regarding selection of button, which is information indicating the selection of the button when said button has been selected, to a predetermined computation server,
wherein said information regarding presentation of button is generated based on a computation result of the information regarding selection of button, outputted by said output unit for information regarding selection of button.

3. The acquisition apparatus for content-related information according to Claim 1 or 2, comprising a plurality of said buttons.

4. The acquisition apparatus for content-related information according to any one of Claims 1 to 3, further comprising:
a management unit for button information, which manages the button information, stored in said storage unit for button information.

5. The acquisition apparatus for content-related information according to any one of Claims 1 to 4, further comprising:
an acquisition unit for identification information of information source, which extracts a keyword from the acquired content information, and acquires identification information of information source in order to identify the information source, which can provide content-related information, based on the extracted keyword; and
a registration unit, which registers the information source, identified by the identification information of information source acquired by the acquisition unit for identification information of information source.

6. The acquisition apparatus for content-related information according to Claim 5,
wherein said configuration unit for button comprises
means for displaying the identification information of information source assigned to the button, the identification information is also assigned to the button.

7. The acquisition apparatus for content-related information according to any one of Claims 1 to 6,
wherein said configuration unit for button comprises
settlement button means for carrying out a settlement process due to the selection of the button.

8. An operation method for an acquisition apparatus for content-related information, which outputs content based on acquired content information, comprises a storage unit for button information, which stores button information for configuring a button, which is to be a trigger for accessing to a registered specific information source when selected, and configures the button based on the button information stored by the storage unit for button information, the method comprising the steps of:
acquiring information regarding presentation of button, which is information indicating that said specific information source can provide content-related information; and
varying a button form of the button when acquiring the information regarding presentation of button.

9. The operation method for an acquisition apparatus for content-related information according to Claim 8, comprising the step of:
outputting information regarding selection of the button, which is information indicating the selection of the button when said button has been selected, to a predetermined computation server,
wherein said step of acquiring information regarding presentation of button acquires the information regarding presentation of button, which is generated based on a computation result of the information regarding selection of button, outputted by said step of outputting information regarding selection of the button.

10. The operation method for an acquisition apparatus for content-related information according to Claim 8 or 9, comprising the steps of:
extracting a keyword from the acquired content information, and acquiring identification information of information source in order to identify the information source, which can provide content-related information, based on the extracted keyword; and
registering the information source, identified by the identification information of information source acquired by the step of acquiring identification information of information source, as a specific information source.

11. The operation method for an acquisition apparatus for content-related information according to any one of Claims 8 to 10, comprising the step of:
carrying out a settlement process due to said selection of the button.
